# FASCICULE DE BREVET EUROPEEN

(11) **EP 3 652 796 B1**
(45) Date de publication et mention de la délivrance du brevet: **24.11.2021**
(21) Numéro de dépôt: 18738318.7
(22) Date de dépôt: 10.07.2018
(51) Int. Cl.: H01M 4/38, H01M 4/86, H01M 10/44, H01M 12/08

(54) **PROCÉDÉ DE GESTION DE LA PUISSANCE ÉLECTRIQUE TRANSITANT PAR UNE CELLULE DE BATTERIE MÉTAL-AIR ET CELLULE ASSOCIÉE**
VERFAHREN ZUR STEUERUNG DER ELEKTRISCHEN LEISTUNG, DIE DURCH EINE METALLLUFTBATTERIEZELLE FLIESST, UND ZUGEHÖRIGE ZELLE
PROCESS OF MANAGING THE ELECTRICAL POWER TRANSITING THROUGH A METAL-AIR BATTERY CELL AND ASSOCIATED CELL

(30) Priorité: 10.07.2017 FR 1756511
(43) Date de publication de la demande: 20.05.2020
(73) Titulaire: Electricité de France, 75008 Paris (FR)
(72) Inventeur: STEVENS, Philippe, 77940 Noisy Rudignon (FR); TOUSSAINT, Gwenaëlle, 77140 Nemours (FR)
(74) Mandataire: Plasseraud IP
(86) Numéro de dépôt international: PCT/EP2018/068627
(87) Numéro de publication internationale: WO 2019/011899

(56) Documents cités:
- WO-A1-2013/110097
- FR-A1- 2 975 534

## Description

### DOMAINE TECHNIQUE

L'invention se rapporte au domaine des batteries métal-air, et plus particulièrement aux procédés de gestion de la puissance électrique transitant dans ces batteries, pendant les phases de charge et décharge. L'invention peut tout aussi bien se rapporter à une seule cellule métal-air ou à un ensemble de cellules formant une batterie.

### ARRIÈRE-PLAN TECHNOLOGIQUE

Les cellules de batteries métal-air se composent généralement d'une électrode négative à base d'un métal tel que le zinc, le fer ou le lithium, couplée à une électrode à air. Ces deux électrodes sont généralement en contact avec un électrolyte aqueux alcalin.

Lors de la décharge d'une telle batterie, de l'oxygène est réduit à l'électrode positive et le métal est oxydé à l'électrode négative :
Décharge à l'électrode négative : M → Mⁿ⁺ + n e⁻
Décharge à l'électrode positive : O₂ + 2 H₂O + 4 e⁻ → 4 OH⁻

L'avantage des systèmes métal-air réside dans l'utilisation d'une électrode positive de capacité infinie, l'oxygène consommé à l'électrode positive n'ayant pas besoin d'être stocké dans l'électrode mais pouvant être prélevé dans l'air ambiant. Les générateurs électrochimiques de type métal-air sont donc connus pour leurs énergies massiques élevées, pouvant atteindre plusieurs centaines de Wh/kg.

Les électrodes à air sont par exemple utilisées dans des piles à combustible alcalines qui sont particulièrement avantageuses par rapport à d'autres systèmes en raison des cinétiques réactionnelles élevées au niveau des électrodes et en raison de l'absence de métaux nobles tels que le platine.

Une électrode à air est une structure solide poreuse, généralement en poudre de carbone, en contact avec l'électrolyte liquide. L'interface entre l'électrode à air et l'électrolyte liquide est une interface dite « à triple contact » où sont présents simultanément la matière solide active de l'électrode (cette électrode comprenant généralement en outre un catalyseur), l'oxydant gazeux, c'est-à-dire l'air, et l'électrolyte liquide. L'électrode à air est habituellement composée de poudre de carbone à haute surface, permettant d'offrir une surface de réaction élevée et donc une densité de courant importante par rapport à la surface géométrique de l'électrode. Une grande surface de réaction est avantageuse pour compenser la différence entre la densité de l'oxygène gazeux et celle d'un liquide. Par exemple, la densité molaire de l'oxygène dans l'air est égale à environ 0,03 mol/L comparé à l'eau qui a une densité de 55 mol/L. La grande surface du carbone permet de multiplier les sites de réaction dans l'électrode à air.

Une description des différents types d'électrodes à air pour batteries zinc-air est exposée par exemple dans l'article bibliographique de V. Neburchilov et al., intitulé « A review on air cathodes for zinc-air fuel cells », Journal of Power Sources 195 (2010) p. 1271-1291. Lorsqu'une batterie métal-air doit être rechargée électriquement, le sens du courant est inversé. De l'oxygène est produit à l'électrode positive et le métal est redéposé par réduction à l'électrode négative :
Recharge à l'électrode négative : Mⁿ⁺ + n e⁻ → M
Recharge à l'électrode positive : 4 OH⁻ → O₂ + 2 H₂O + 4 e⁻

L'électrode à air n'est pas conçue pour être utilisée en sens inverse, et a tendance à être détruite mécaniquement par la pression hydraulique qui s'y forme lors de la production d'oxygène. Cette pression hydraulique provoque généralement une rupture des liaisons entre les grains de carbone dont est constituée l'électrode à air. Cette dégradation réduit la durée de vie de la batterie.

En outre, le catalyseur ajouté à l'électrode à air pour améliorer le rendement énergétique de la réaction de réduction de l'oxygène se dégrade au potentiel nécessaire à la réaction d'oxydation inverse lors de la charge de la batterie. La corrosion du carbone en présence d'oxygène par oxydation du carbone est également accélérée à des potentiels plus élevés. Afin de remédier à ces problèmes de stabilité, notamment en charge, il a été proposé d'utiliser une deuxième électrode positive qui n'est utilisée que pour la charge de la batterie. Un commutateur permet alors de relier une borne positive d'un circuit à la deuxième électrode pendant la charge, et de relier cette borne positive à l'électrode à air lors de la décharge de la batterie. La demande WO 2014/083267 décrit un exemple de batterie utilisant un tel système pour préserver l'électrode à air d'une dégradation en phase de charge.

Cette deuxième électrode positive, utilisée pendant la charge de la batterie, est typiquement composée d'une grille métallique en nickel ou un alliage de métaux. Cette électrode peut également être composée d'un matériau capable de stocker une quantité limitée d'énergie électrique sans dégagement d'oxygène. Un exemple d'une telle électrode positive est une électrode composée d'oxy-hydroxyde de nickel, NiO(OH).

Malgré une amélioration sensible de la durée de vie d'une batterie métal-air en prévoyant une deuxième électrode positive utilisée en charge pour le dégagement d'oxygène, les performances électriques de la batterie métal-air se dégradent au cours du temps.

En outre, l'électrode à air est limitée en puissance par la vitesse de diffusion de l'air dans la structure poreuse de l'électrode. Malgré une grande densité d'énergie, qui permet à une batterie métal-air de restituer pendant une longue durée l'énergie électrique stockée dans sa ou ses cellules, les contraintes physiques liées à cette vitesse de diffusion dans les électrodes à air limitent les puissances électriques que ces batteries sont capables de fournir.

En raison de cette contrainte, les applications nécessitant des besoins en puissance supérieurs aux puissances que l'électrode à aire est capable de fournir font appel à des systèmes complexes intégrant batterie métal-air et sources supplémentaires séparées. Par exemple, une batterie métal-air utilisée pour les faibles appels de puissance peut être utilisée conjointement avec un supercondensateur ou un condensateur aptes à fournir une plus grande puissance électrique pendant de brefs lapse de temps. Toutefois, ces systèmes rendent plus compliquée l'utilisation des batteries métal-air.

Le document WO2013/110097 décrit des cellules pour batteries métal-air mettant en œuvre une première électrode métallique réversible, une électrode à air, et une seconde électrode réversible agissant comme une cathode en phase de décharge et comme une anode en phase de charge. Ce document décrit une décharge en deux temps dans laquelle seule la deuxième électrode positive est utilisée et seulement en début de décharge, et un deuxième temps où l'électrode à air est utilisée quand la tension entre les bornes de la batterie est descendue suffisamment pour atteindre une valeur seuil. Dans ce document, les deux phases de décharge sont consécutives et un contrôle de la tension est effectué pour passer du premier temps au deuxième temps. Toutefois, dans les batteries, la mesure de la tension ne constitue pas un bon indicateur de la puissance de la batterie et est utilisée pour déterminer un état de charge seulement. En effet, dans une batterie (contrairement à une résistance), la tension varie peu avec la puissance et de manière non linéaire, mais elle dépend d'autres paramètres tels que le potentiel thermodynamique des électrodes, le transport de masse des ions dans l'électrolyte, les phénomènes d'accumulation de charges aux interfaces et les barrières d'activations lié aux réactions oxydo-réduction ou l'état de charge de l'électrode. Il en résulte que la mesure de la tension conduite dans le document WO2013/110097 sur une batterie, ne permet pas de gérer la puissance électrique transitant dans la batterie de manière satisfaisante.

Le document FR2975534 divulgue une cellule métal-air comprenant une électrode négative et deux électrodes positives : une première électrode positive (4) à dégagement d'oxygène, et une deuxième électrode positive (5) qui est une électrode à air poreuse. La décharge se fait en eux phases, en utilisant la première électrode positive soit pendant toute la décharge, soit pendant la 1^{ère} phase de décharge où la 2^{e} électrode positive est déconnectée, et la deuxième électrode positive (électrode à air) pendant la 2^{e} phase de décharge, lorsque la tension est suffisamment faible. La connexion et la déconnexion de la deuxième électrode positive (électrode à air) est assurée par des moyens de commutation (7) et des moyens de mesure de la tension (6).

Le document US2011/0250512 décrit une cellule métal-air comprenant une électrode négative, une électrode positive à air, une électrode à dégagement d'oxygène et une électrode à haut rendement permettant la mise en œuvre de phases de charge et de décharge standard via l'électrode à air, et, un dans mode de réalisation, avec un meilleur rendement via l'électrode à haut rendement.

Il est par conséquent recherché un procédé permettant d'augmenter les performances électriques d'une batterie métal-air, notamment en améliorant leur capacité à fournir de la puissance électrique et à mieux gérer les puissances électriques transitant dans la batterie en charge et décharge.

### EXPOSE DE L'INVENTION

Pour répondre aux problèmes exposés ci-avant, la présente invention propose un procédé de gestion ainsi qu'une cellule pour batterie selon les revendications 1 et 9, respectivement. Dans ce procédé de gestion de la puissance électrique transitant par une cellule d'une batterie métal-air, la cellule comprend :
- une électrode négative reliée électriquement à une borne négative de la batterie ;
- une première électrode positive formant une électrode à air de la cellule ;
- une deuxième électrode positive formant une électrode de puissance de la cellule ;
- un moyen de commutation permettant de relier électriquement à une borne positive de la batterie une électrode parmi la première électrode positive et la deuxième électrode positive.

Le procédé comprend en outre :
- maintenir le moyen de commutation dans une configuration connectant la borne positive à la première électrode positive lorsqu'une puissance électrique à transiter dans la batterie correspond à un premier régime de puissances ;
- maintenir le moyen de commutation dans une configuration connectant la borne positive à la deuxième électrode positive lorsqu'une puissance électrique à transiter dans la batterie correspond à un deuxième régime de puissances, le deuxième régime de puissances étant associé à des puissances électriques plus fortes que des puissances électriques du premier régime.

L'invention permet d'optimiser la puissance électrique transitant par une cellule de batterie métal-air en exploitant au mieux les capacités électriques (exprimées en mAh/cm²) des différentes électrodes positives.

En effet, l'électrode à air (première électrode positive) possède une densité d'énergie supérieure à celle de la deuxième électrode positive mais ne peut fournir une puissance électrique importante en raison notamment de la vitesse de diffusion de l'air dans sa structure. L'électrode à air est donc efficace dans les situations nécessitant peu de puissance en décharge (ou les situations fournissant peu de puissance à la batterie en charge) mais peut délivrer ou emmagasiner de la puissance électrique sur une durée plus longue que la deuxième électrode positive.

La deuxième électrode positive quant à elle n'est pas limitée par la vitesse de diffusion de l'air et peut donc servir lorsque des puissances électriques plus importantes sont demandées à la batterie en décharge, et lorsqu'un apport de puissance ponctuel plus important est disponible en charge.

Une telle gestion de la puissance transitant par une cellule de batterie métal-air peut notamment servir à charger plus rapidement la batterie, en privilégiant une charge à forte puissance sur la deuxième électrode positive, tandis que la première électrode positive peut par exemple être utilisée lors de charges lentes à faible puissance électrique. Toutefois, il peut être préférable d'éviter de charger la batterie en utilisant la première électrode positive pour éviter un dégagement d'oxygène susceptible d'endommager sa structure poreuse.

En outre, en décharge, l'invention peut avantageusement utiliser les possibilités électriques différenciées des deux électrodes positives pour ne plus avoir à ajouter un système électrique complémentaire pour les besoins de puissances supérieures aux puissances que l'électrode à air est capable d'encaisser (comme d'avoir recours à des supercondensateurs ou condensateurs). Ainsi, la batterie métal-air peut répondre seule à ces différents besoins en puissance, ce qui permet de concevoir des systèmes moins complexes, plus simples à construire et à piloter en charge et décharge.

Selon un mode de réalisation, le procédé peut en outre comprendre :
- obtenir la valeur d'un paramètre représentatif d'une puissance électrique à transiter dans la batterie ;
- comparer la valeur estimée à une valeur seuil représentative d'une transition entre le premier régime et le deuxième régime ; et
lorsque la valeur estimée est supérieure à la valeur seuil :
- maintenir le moyen de commutation dans une configuration connectant la borne positive à la deuxième électrode positive afin de répondre aux critères de puissance du deuxième régime ;
lorsque la valeur estimée est inférieure à la valeur seuil :
- maintenir le moyen de commutation dans une configuration connectant la borne positive à la première électrode positive afin de répondre aux critères de puissance du premier régime.

Le paramètre représentatif d'une puissance électrique à transiter dans la batterie peut de préférence être un courant électrique transitant dans la batterie.

Selon un mode de réalisation, le paramètre représentatif de la puissance électrique à transiter par la batterie peut être un courant électrique mesuré sur l'électrode négative.

Notamment, lorsque la cellule se décharge et lorsque l'amplitude du courant mesuré est supérieure à la valeur seuil, le procédé peut comprendre :
- maintenir le moyen de commutation dans une position connectant la borne positive à la deuxième électrode positive ;
lorsque l'amplitude du courant mesuré est inférieure à la valeur seuil :
- maintenir le moyen de commutation dans une position connectant la borne positive à la première électrode positive.

Un courant mesuré sur l'électrode négative en augmentation est le signe d'une hausse de la puissance électrique reçue ou à fournir par la batterie. En définissant une valeur seuil pour ce courant mesuré, il est possible d'adapter le régime de fonctionnement de la batterie à son environnement extérieur.

Selon un mode de réalisation, la cellule comprenant une troisième électrode positive de dégagement d'oxygène, le procédé peut en outre comprendre, lorsque la cellule se charge et lorsque l'amplitude du courant mesuré est supérieure à la valeur seuil :
- maintenir le moyen de commutation dans une position connectant la borne positive à la deuxième électrode positive ;
lorsque l'amplitude du courant mesuré est inférieure à la valeur seuil :
- maintenir le moyen de commutation dans une position connectant la borne positive à la troisième électrode positive.

Ce mode de réalisation mettant en œuvre une troisième électrode positive est particulièrement préféré lorsque le procédé selon l'invention est opéré en phase de charge nécessitant une forte puissance.

En utilisant une troisième électrode positive dans la batterie, il est possible de protéger notamment la première électrode positive (électrode à air) contre les effets négatifs du dégagement d'oxygène en charge, mais également la deuxième électrode positive, qui peut elle aussi se dégrader progressive sous l'effet de la libération d'oxygène. Ainsi, la troisième électrode positive peut être utilisée lorsqu'une charge lente à faible puissance électrique intervient, et la deuxième électrode positive peut être utilisée lorsque la batterie reçoit une plus forte puissance électrique, ce qui permet en outre de charger plus rapidement la batterie.

Notamment, la valeur seuil peut être comprise entre 20 mA par cm² d'électrode négative et 40 mA par cm² d'électrode négative.

Cette valeur seuil peut notamment être adaptée pour une batterie métal-air avec une électrode négative de zinc et une deuxième électrode positive en oxyhydroxyde de nickel. D'autres valeurs peuvent être estimées lorsque d'autres matériaux sont utilisés pour les différentes électrodes constitutives de la batterie.

Selon un mode de réalisation, le procédé peut en outre comprendre :
- sélectionner la configuration du moyen de commutation à partir de prévisions de puissance à transiter dans la batterie.

Si le fonctionnement d'un circuit électrique auquel la batterie est relié va avoir des besoins en puissance prévisibles à l'avance, ou bien si ce circuit électrique est en mesure de fournir une puissance accrue ou réduite à des horaires et pendant des durées prévisibles, il est possible de programmer la permutation entre les électrodes positives (électrode à air et deuxième électrode positive) pour optimiser l'efficacité en charge et décharge de la batterie en tenant compte de ces pics de puissance. Par exemple, lorsque le circuit électrique comprend un panneau photovoltaïque, des prévisions d'ensoleillement permettent d'estimer à l'avance les variations de puissance que la batterie pourrait subir. Lorsque la batterie est utilisée par exemple dans un véhicule électrique, notamment un véhicule électrique autonome, il est envisageable de prévoir à l'avance l'énergie qui sera nécessaire pour déplacer le véhicule et donc les puissances électriques mises en jeu sur la base du terrain parcouru et du trafic par exemple.

Selon un mode de réalisation, le procédé peut en outre comprendre, en début de charge de la batterie :
- maintenir le moyen de commutation dans une position connectant la borne positive à la deuxième électrode positive.

En début de charge, il est préférable d'éviter un dégagement d'oxygène trop précoce ou trop important. En connectant préférentiellement la deuxième électrode positive en charge plutôt que l'électrode à air, on évite un dégagement d'oxygène qui pourrait contribuer à détruire prématurément l'électrode à air d'une part, et qui pourrait d'autre part ralentir la charge de la batterie en perturbant la circulation des ions dans l'électrolyte et notamment en ralentissant la dynamique de dépôt des ions métalliques sur l'électrode négative.

L'invention se rapporte également à une cellule pour batterie métal-air comprenant :
- une électrode négative apte à être reliée électriquement à une borne négative de la batterie ;
- une première électrode positive formant une électrode à air de la cellule ;
- une deuxième électrode positive formant une électrode de puissance de la cellule ;
- un moyen de commutation permettant de relier électriquement à une borne positive de la batterie une électrode parmi la première électrode positive et la deuxième électrode positive.

Selon un mode particulier de réalisation, la cellule est caractérisée en ce que la deuxième électrode positive est positionnée entre l'électrode négative et la première électrode positive.

Le moyen de commutation peut en outre être configuré pour :
- connecter la borne positive à la première électrode positive lorsqu'une puissance électrique à transiter dans la batterie correspond à un premier régime de puissances ;
- connecter la borne positive à la deuxième électrode positive lorsqu'une puissance électrique à transiter dans la batterie correspond à un deuxième régime de puissances, le deuxième régime de puissances étant associé à des puissances électriques plus fortes que des puissances électriques du premier régime.

Une telle cellule est notamment adaptée pour la mise en œuvre du procédé de gestion de la puissance électrique décrit ci-avant. Il peut notamment être avantageux de prévoir en guise de deuxième électrode positive une électrode comprenant un oxyde de métal tel que de l'oxyhydroxyde de nickel. Ces matériaux sont généralement de bons candidats pour former des électrodes de puissance, dont la densité d'énergie est plus faible que celle de l'électrode à air, mais qui peuvent délivrer des puissances électriques plus grandes qu'une électrode à air.

Notamment, la cellule peut comprendre un appareil de mesure d'un paramètre représentatif d'une puissance électrique à transiter dans la batterie.

Un tel appareil peut être prévu par exemple pour mesurer un courant dans la batterie ou une tension aux bornes d'une résistance connectée en série à ladite batterie, en vue de déterminer les appels de puissance électrique et les apports de puissance électrique dans la batterie et dans un circuit électrique relié à la batterie.

Notamment, l'appareil de mesure peut être choisi parmi : un capteur à effet Hall pour mesurer un courant, une résistance, une dérivation.

Selon un mode de réalisation, le moyen de commutation peut être choisi parmi : un relais mécanique, un relais électromécanique.

Selon un mode de réalisation, la cellule peut en outre comprendre :
- une troisième électrode positive formant une électrode de dégagement d'oxygène de la cellule.

En prévoyant une troisième électrode positive, l'invention peut être utilisée pour augmenter la durée de vie de la batterie, en limitant l'usure de la deuxième électrode positive en l'utilisant moins souvent et en alternance avec la troisième électrode positive. La troisième électrode positive peut notamment être sélectionnée lorsqu'un dégagement d'oxygène important a lieu dans la batterie en charge, pour préserver la deuxième électrode positive de possibles effets néfastes liés à ce dégagement d'oxygène.

Selon un mode préféré de réalisation, la troisième électrode positive est également positionnée entre l'électrode négative et la première électrode positive.

L'invention se rapporte également à une cellule pour batterie métal-air comprenant deux ensembles d'électrodes positives précédemment décrites, disposées de manière symétrique de part et autre de l'électrode négative. Dans ce mode de réalisation, l'invention se rapporte à une cellule symétrique pour batterie métal-air comprenant deux ensembles d'électrodes positives précédemment décrites, ayant en commun une électrode négative entre les deux ensembles positifs.

Selon un mode de réalisation, la cellule peut être agencée dans un dispositif choisi parmi : un panneau photovoltaïque, un véhicule électrique.

De tels dispositifs présentent des variations importantes dans la puissance électrique consommée ou produite au cours du temps. Les panneaux photovoltaïques produisent plus ou moins de puissance en fonction du taux d'ensoleillement et les véhicules électriques consomment plus ou moins de puissance électrique en fonction de leurs conditions d'utilisation et de l'accélération notamment. Les véhicules électriques peuvent également offrir ponctuellement des opportunités de recharge intéressantes notamment lors de phases de freinage, pendant lesquelles de la puissance électrique transitoire peut être plus efficacement récupérée et stockée grâce à la deuxième électrode positive (électrode de puissance) dans une cellule selon l'invention.

L'invention se rapporte également à une batterie métal-air comprenant au moins une cellule telle que décrite et exposée ci-avant.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'une cellule de batterie métal-air comprenant un commutateur gérant la puissance électrique transitant dans la batterie selon l'invention ;
- la figure 2 est ordinogramme représentant un procédé de charge d'une batterie métal-air selon l'invention ;
- la figure 3 est un ordinogramme représentant un procédé de décharge d'une batterie métal-air selon l'invention ;
- la figure 4 est une représentation schématique d'une batterie métal-air selon l'invention comprenant en outre une troisième électrode positive pour réduire les effets négatifs d'un dégagement d'oxygène dans la batterie en charge ;
- la figure 5 est un graphique représentant le courant transitant dans la batterie mesuré au niveau de l'électrode négative en fonction du temps pour une utilisation de la batterie dans un véhicule électrique ;
- la figure 6 est une représentation schématique d'un système informatique pouvant être utilisé pour mettre en œuvre le procédé de l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

La présente invention propose un procédé de gestion de la puissance électrique transitant par une cellule d'une batterie métal-air qui optimise à la fois en charge et décharge le fonctionnement de la batterie. Le procédé et la cellule permettant de mettre en œuvre le procédé réduisent le besoin d'avoir recours à des supercondensateurs ou condensateurs en complément d'une batterie métal-air pour subvenir à des appels de puissance ponctuels. Par ailleurs, l'invention permet également d'optimiser le temps de charge en chargeant la batterie via une électrode positive capable d'emmagasiner et de délivrer de plus fortes puissances que l'électrode à air. Cette électrode de puissance permet de mieux exploiter les opportunités de recharge lorsque la batterie reçoit une forte puissance électrique pendant de brefs lapse de temps. Lors de charges lentes à plus faible puissance, il est par contre possible de basculer la charge sur l'électrode à air ou une autre électrode.

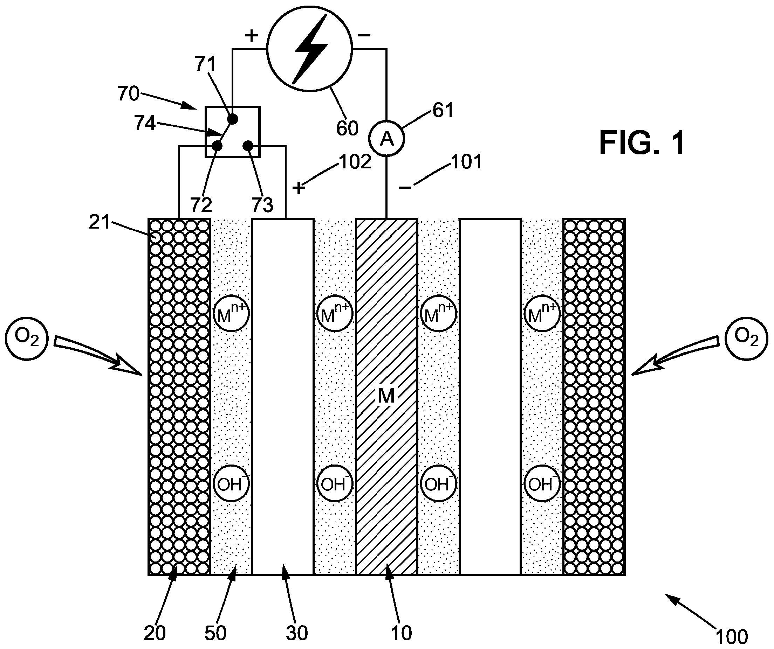

La figure 1 représente schématiquement une cellule 100 de batterie métal-air comprenant une électrode négative 10, un électrolyte 50 de pH fortement basique (typiquement de pH au moins égal à 14), une première électrode positive 20 formant une électrode à air de la batterie et une deuxième électrode positive 30 formant une électrode puissance de la batterie. L'électrode à air a une structure poreuse et est constituée de poudre de carbone 21. En décharge, l'air réagit dans la structure de l'électrode à air avec l'électrolyte pour produire des ions hydroxyles et le métal M de l'électrode négative se transforme en ions qui circulent dans l'électrolyte, comme expliqué ci-avant.

Le fonctionnement de l'électrode à air est contraint en puissance par la vitesse de diffusion de l'air dans la structure poreuse de l'électrode, ce qui empêche cette électrode de délivrer des puissances électriques importantes. La deuxième électrode positive 30 d'une batterie métal-air n'est pas limitée par ce phénomène et peut théoriquement délivrer des puissances électriques plus importantes que l'électrode à air.

L'utilisation de la deuxième électrode positive 30 dans une batterie métal-air est généralement limitée à la charge de la batterie, afin d'éviter que le dégagement d'oxygène ne se produise dans la structure de la première électrode positive 20.

Les inventeurs ont remarqué que la deuxième électrode positive peut également être utilisée de manière avantageuse en décharge pour fournir des puissances électriques supérieures à celles accessibles avec l'électrode à air seule.

Notamment, la deuxième électrode positive peut typiquement être en un métal tel que le nickel, l'argent ou un acier inoxydable.

Il a été observé que l'utilisation d'oxydes de métaux dans la deuxième électrode positive 30 pouvait présenter un intérêt pour augmenter davantage encore les performances électriques d'une batterie métal-air.

Cette deuxième électrode positive 30, généralement en un métal tel que le nickel, est parfois composée d'un oxyde comme par exemple l'oxyhydroxyde de nickel (NiOOH) utilisant le couple Ni(II)/Ni(III).

Il a été constaté que l'utilisation de l'oxyhydroxyde de nickel (NiOOH) utilisant le couple Ni(II)/Ni(III) dans le matériau de la deuxième électrode positive 30 présente des avantages d'un point de vue électrique. En effet l'oxy-hydroxyde de nickel est plus performant en puissance que l'électrode à air. L'utilisation d'une deuxième électrode positive 30 en oxyhydroxyde de nickel offre la possibilité de combiner les avantages de durée de cycle de décharge des batteries métal-air (accessibles grâce à la forte densité d'énergie des électrodes à air) avec des performances en puissance des batteries métal-nickel. Une cellule de batterie métal-air utilisant en guise de deuxième électrode positive 30 un oxyde de métal tel que de l'oxyhydroxyde de nickel forme une cellule hybride « métal-nickel-air ».

En phase de décharge, la réaction suivante est observée sur la deuxième électrode positive 30 :

NiO(OH) + H₂O + e⁻ → Ni(OH)₂ + OH⁻ (réaction a)

Une telle batterie peut permettre une gestion plus fine de la puissance et de l'énergie électrique transitant dans la batterie. Lorsqu'une demande de puissance standard parvient à la batterie en phase de décharge, la première électrode positive 20 peut être connectée à la borne positive. Pour des appels de puissance plus importants, il est possible de connecter la deuxième électrode positive en oxyhydroxyde de nickel.

Le choix du matériau constituant la deuxième électrode positive ne se limite pas aux matériaux listés ci-avant. Il est possible de prévoir tout alliage ou matériau pour remplir cette fonction d'électrode de puissance, apte à fournir des puissances électriques plus importantes que l'électrode à air. Par exemple, outre l'oxyhydroxyde de nickel, des matériaux comme l'oxyde d'argent ou l'oxyde de manganèse peuvent être utilisés. La deuxième électrode positive est typiquement en un matériau possédant un potentiel d'oxydoréduction plus positif que celui du matériau constitutif de l'électrode négative (typiquement le zinc, le fer ou le lithium).

La figure 1 représente un circuit 60 électrique relié à une borne négative 101 de la batterie comprenant la cellule 100 (l'électrode négative 10) et une borne positive 102 de la batterie comprenant la cellule 100. La borne positive du circuit 60 est reliée à un moyen de commutation 70 comprenant trois points de connexion 71, 72, 73 et un moyen de branchement 74 de deux de ces points. Le moyen de commutation 70 peut notamment être un commutateur, un relais mécanique ou un relais électromécanique par exemple. Le moyen de commutation peut être piloté par un système gérant les appels de puissance de la batterie, tel qu'un BMS (pour « battery management system » selon la terminologie anglo-saxonne) adapté pour mettre en œuvre le procédé de la présente invention.

Un appareil de mesure 61, relié préférentiellement à l'électrode négative 10 permet de mesurer un paramètre électrique de la cellule 100 donnant une indication sur la puissance reçue ou à fournir par la batterie. Cet appareil de mesure du courant peut, par exemple, être un ampèremètre ou un capteur à effet Hall permettant une mesure directe du courant ou une résistance ou une dérivation (« shunt » selon la terminologie anglo-saxonne) mesurant la tension aux bornes d'une résistance, laquelle tension aux bornes de la résistance est (contrairement à une batterie) directement proportionnelle au courant.

L'invention permet de distinguer deux régimes de fonctionnement différents, aussi bien en charge qu'en décharge, sur la base de la puissance électrique reçue ou à fournir par la batterie. Dans un premier régime de puissances, le moyen de commutation 70 connecte la borne positive 102 de la batterie à la première électrode positive 20. Dans un deuxième régime de puissances correspondant à des puissances plus élevées que celles du premier régime, le moyen de commutation 70 connecte la borne positive 102 à la deuxième électrode positive.

Bien que l'appareil de mesure 61 représenté sur la figure 1 soit un ampèremètre mesurant un courant électrique transitant dans la batterie, d'autres moyens de contrôle de la puissance électrique reçue ou à fournir par la batterie peuvent être envisagés. L'appareil de mesure peut être tout appareil mesurant un paramètre représentatif d'une puissance électrique à transiter dans la batterie, comme une tension électrique aux bornes d'une résistance reliée à la batterie ou un courant par exemple. Un voltmètre mesurant le courant peut être placé par exemple en amont du moyen de commutation sur la borne positive de la batterie.

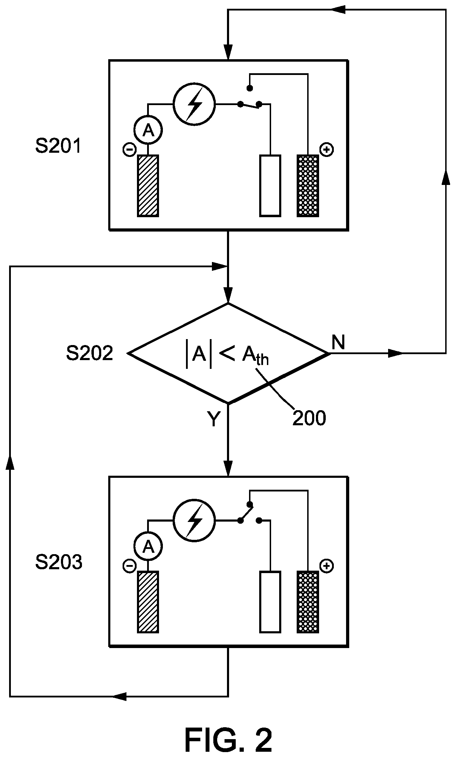

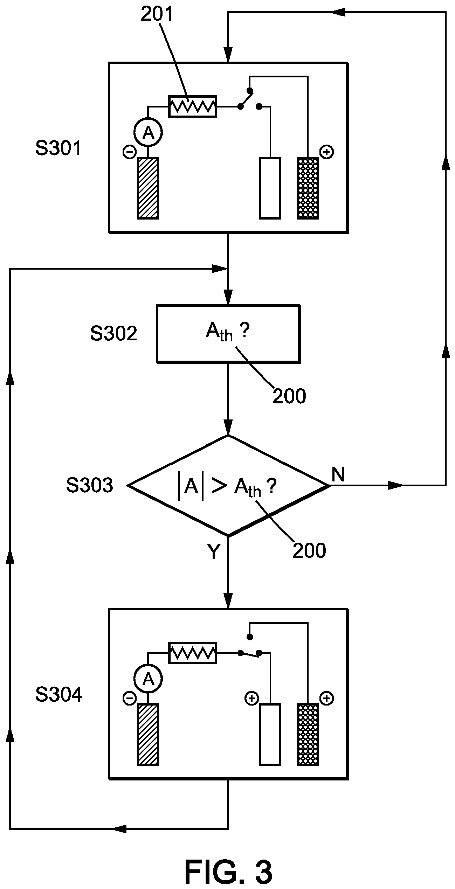

Les figures 2 et 3 illustrent schématiquement deux ordinogrammes représentatifs d'un cycle de charge et de décharge d'une batterie métal-air selon le procédé de l'invention.

Lors d'une première étape S201 en charge, la borne positive d'un circuit 60 électrique est reliée à la deuxième électrode positive 30 de la batterie. Il est préférable de débuter la charge en connectant la deuxième électrode positive 30 même si les appels de puissance ne le justifient pas par la suite, dans la mesure où le dégagement d'oxygène sur la première électrode positive 20 pendant une période prolongée risque de la détériorer. Par ailleurs, un dégagement trop important de bulles d'oxygène dans l'électrolyte à partir de l'électrode à air peut non seulement endommager indument l'électrode à air, mais peut contribuer à perturber le dépôt d'ions métalliques sur l'électrode négative lors de la réduction du sel en métal. Plus le courant de charge est fort, plus les bulles d'oxygène générées sont importantes, ce qui accentue l'inhomogénéité du dépôt de métal sur l'électrode négative. Ainsi, une gestion pertinente des phases de charge qui privilégient l'utilisation de la deuxième électrode positive 30 pour favoriser des charges rapides emmagasinant au mieux les fortes puissances reçues contribue à réduire la formation de ces bulles et leur effet destructeur sur la batterie.

Tout au long de la charge et pendant l'étape S202 sur la figure 2, le paramètre représentatif d'une puissance à transiter par la batterie est mesuré et comparé à une valeur seuil Ath, 200, représentative d'une transition entre le premier régime de puissances et le deuxième régime de puissances. Pour une deuxième électrode positive 30 en oxyhydroxyde de nickel couplée avec une électrode négative 10 de zinc, et lorsque le paramètre mesuré est un courant électrique à transiter dans la batterie, la valeur seuil peut par exemple être comprise entre 20 mA/cm² et 40 mA/cm² (ce courant étant exprimé en mA par centimètres carrés d'électrode négative), et avantageusement égale à 30 mA/cm².

Lorsque l'amplitude du courant mesuré est inférieure à la valeur seuil 200, ceci est représentatif d'un faible apport de puissance. Il est alors pertinent de prévoir une charge lente sur la première électrode positive 20 et de relier l'électrode à air sur la borne positive 102 de la batterie, la deuxième électrode positive 30 étant électriquement inactive. Lorsque l'amplitude du courant mesuré devient supérieure à la valeur seuil, ceci est représentatif d'un apport de puissance plus important et il devient alors pertinent d'en profiter pour effectuer une charge plus rapide et sans endommager l'électrode à air, en connectant la deuxième électrode positive 30 à la borne positive 102 de la batterie (représenté sur la figure 2 par l'étape S203).

La charge de la batterie, représenté par l'ordinogramme de la figure 3 procède de la même manière. À la différence de l'ordinogramme de la figure 2, la phase initiale de décharge propose de connecter la première électrode positive 20 à la borne positive 102 de la batterie à l'étape S301. La valeur seuil 200 peut aussi être réévaluée en cours de décharge comme indiqué par l'étape S302, notamment pour tenir compte du fait que la deuxième électrode positive ne fournit pas la même puissance tout au long du cycle de décharge de la batterie, la puissance maximale disponible décroissant généralement progressivement au cours du temps. La valeur seuil 200 et son évolution au cours d'un cycle de décharge peut être estimée empiriquement ou bien sur la base d'un premier cycle de charge/décharge pour une batterie métal-air au cours duquel les puissances électriques disponibles en décharge sont mesurées en continu au cours du temps.

À l'étape S303, le courant mesuré est comparé à la valeur seuil 200. Si ce courant est supérieur à la valeur seuil 200, l'électrode de puissance est connectée et l'électrode à air débranchée comme indiqué à l'étape S304.

Différents modes de fonctionnement pour gérer la puissance électrique transitant ou à transiter par une batterie métal-air peuvent être envisagés.

Il est possible qu'une unité de contrôle du moyen de commutation 70 soit programmée pour connecter séquentiellement les première ou deuxième électrodes positives à la borne positive 102 de la batterie, à partir d'un cycle de fonctionnement préprogrammé. Un tel cycle préprogrammé peut être déterminé à l'avance, sur la base de prévisions de l'utilisation qui va être faite de la batterie.

Un tel fonctionnement peut être combiné avec un fonctionnement prenant en compte les appels de puissance et les apports de puissance dans la batterie (déterminés en cours de fonctionnement au moyen de l'appareil de mesure 61 par exemple).

Le procédé de gestion de l'énergie électrique de l'invention peut notamment être mis en œuvre dans des systèmes soumis à des fluctuations de puissance, comme les panneaux photovoltaïques ou les véhicules électriques par exemple.

Les panneaux photovoltaïques produisent plus ou moins de courant électrique et des puissances électriques plus ou moins élevées en fonction du taux d'ensoleillement. Il est possible de prédire ces fluctuations à partir de prévision météorologiques, ou bien de s'adapter en connectant la deuxième électrode positive 30 lorsque la puissance fournie à la batterie métal-air est élevée (fort ensoleillement), et basculer sur l'électrode positive lorsque l'ensoleillement est moins important.

Dans un véhicule électrique, des phases de freinage peuvent représenter des opportunités de recharge rapide sur la deuxième électrode positive 30. D'autres phases de recharge (freinage faible, ou charge sur secteur) peuvent se faire sur l'électrode à air par exemple.

Il a été constaté que la deuxième électrode positive 30 subit elle aussi une certaine dégradation au cours des cycles de charge du fait de la production d'oxygène. Toutefois, il a aussi été remarqué que le dégagement d'oxygène sur cette deuxième électrode positive 30 est moins important que celui observé pour une même charge sur l'électrode à air.

La capacité électrique (exprimée en mAh/cm²) de la deuxième électrode positive 30 s'avère être plus faible que celle de l'électrode négative 10. Ceci est notamment observé dans le cas d'une deuxième électrode positive 30 en oxyhydroxyde de nickel et une électrode négative 10 en zinc. Une conséquence de cette différence de capacité est que la recharge de la cellule nécessite l'intervention de deux réactions d'oxydation au niveau de la deuxième électrode positive 30. Dans une première réaction d'oxydation, le nickel à l'état d'oxydation (II) est transformé en nickel à l'état d'oxydation (III) selon la réaction :

Ni(OH)₂ + OH⁻ → NiO(OH) + H₂O + e⁻ (réaction b)

Lorsque le nickel a changé d'état d'oxydation, une deuxième réaction d'oxydation prend le relais pour continuer à charger l'électrode négative 10 (cette électrode négative étant en zinc, fer ou lithium typiquement), jusqu'à la charge complète de la batterie. Cette deuxième réaction transforme les ions hydroxyles de l'électrolyte 50 en oxygène selon la réaction de dégagement d'oxygène classique :

4 OH⁻ → O₂ + 2 H₂O + 4 e⁻

Afin de limiter au mieux les effets négatifs liés au dégagement d'oxygène, il peut être avantageux de prévoir dans une cellule 100 d'une batterie métal-air une troisième électrode positive, cette dernière étant connectée en charge lorsque la deuxième réaction d'oxydation avec production d'oxygène intervient.

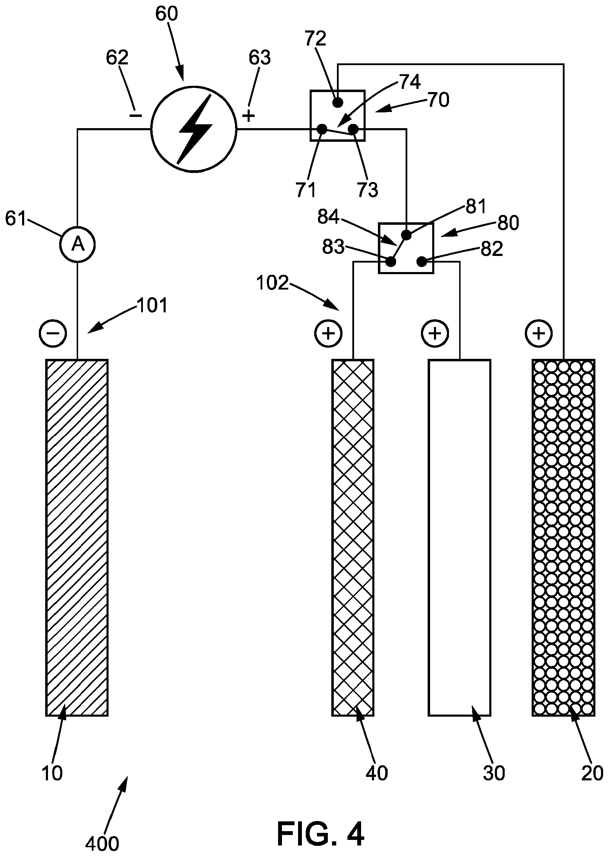

La figure 4 représente schématiquement un exemple de batterie 400 métal-air comprenant une troisième électrode positive 40, en plus de l'électrode négative 10, de la première électrode positive 20 et de la deuxième électrode positive 30. Le circuit 60 électrique possède une borne négative 62 reliée à la borne négative 101 de la batterie 400. Le circuit 60 électrique comprend également une borne positive 63 reliée à une borne positive 102 de la batterie 400.

La batterie 400 est composée sur la figure 4 d'une seule cellule mais elle pourrait également comprendre une multitude de cellules reliées en série ou en parallèle. La batterie 400 comprend un premier moyen de commutation 70 tel que décrit ci-avant, et un deuxième moyen de commutation 80 permettant de relier la borne positive 63 du circuit 60 à la deuxième électrode positive 30 ou à la troisième électrode positive 40. Le deuxième moyen de commutation comprend ainsi trois points de connexion 81, 82, 83 et un moyen de branchement du point de connexion 81 à l'un des points de connexion 82 ou 83.

Selon ce perfectionnement de l'invention, la phase de charge peut être séparée en deux phases : une première phase sans dégagement d'oxygène pendant laquelle il est préféré de brancher la deuxième électrode positive 30 à la borne positive 63 du circuit 60, et une deuxième phase pendant laquelle il est préféré de brancher la troisième électrode positive 40 à la borne positive 63 du circuit 60.

Toutefois, ce mode de charge est complémentaire de la logique de charge/décharge décrite ci-avant, qui consiste à privilégier l'utilisation en charge ou décharge de la deuxième électrode positive 30 lorsque la puissance reçue ou demandée à la batterie 400 est plus élevée que celle que peut gérer l'électrode à air. Il est notamment possible de privilégier l'utilisation de la deuxième électrode positive 30 pour charger la batterie lorsque la puissance électrique reçue est supérieure à un seuil, tandis que la première électrode positive 20 ou la troisième électrode positive 40 peuvent être utilisées quand la puissance électrique reçue est plus faible. La troisième électrode positive 40 serait à préférer à la première électrode positive 20 en charge pour éviter d'endommager la structure poreuse de l'électrode à air.

Les moyens de commutation 70, 80 peuvent être contrôlés sur la base de la mesure d'un courant traversant la batterie, ou d'une tension aux bornes d'une résistance reliée à la batterie par un ou plusieurs appareils de mesure. Lorsqu'une troisième électrode positive 40 est présente dans la batterie 400, il est possible de ne pas du tout utiliser l'électrode à air en charge. La troisième électrode positive 40 est alors une électrode de dégagement d'oxygène, de préférence en un métal pur comme le nickel, le titane ou l'acier.

En outre, lorsque la batterie métal-air comprend une électrode négative 10 de zinc, une deuxième électrode positive 30 en oxyhydroxyde de nickel et une troisième électrode positive 40 en nickel, il est possible de prévoir un seuil de tension pour connecter la deuxième électrode positive 30 à la borne positive 102 de la batterie. Ce seuil de tension peut par exemple correspondre à une amplitude de tension de 1,9V entre les bornes 101, 102. Pour des amplitudes de tension supérieures à 1,9V, la troisième électrode positive 40 est connectée et la deuxième électrode positive 30 est déconnectée. Pour des amplitudes de tension inférieures à 1,9 V, la troisième électrode positive 40 est déconnectée et la deuxième électrode positive 30 est connectée. Un deuxième seuil de tension peut déterminer, préférentiellement en décharge, la connexion de l'électrode à air ou de la deuxième ou troisième électrode positive. Ce deuxième seuil de tension peut par exemple être de 1,2V. Pour des amplitudes de tension supérieures à 1,2V, la deuxième électrode positive 30 est connectée. Pour des amplitudes de tension inférieures à 1,2V, la première électrode positive 20 est connectée.

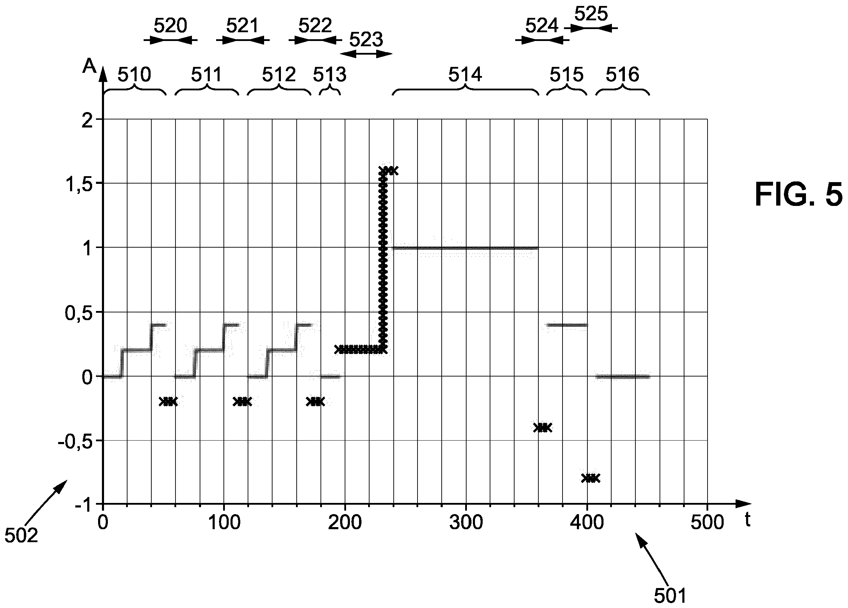

La figure 5 illustre schématiquement le profil du courant électrique transitant par une batterie métal-air telle que présentée ci-avant lorsque cette dernière est installée dans un véhicule électrique. Le courant au cours du temps ne suit pas des cycles de charge et décharge bien définis : la batterie est à tour de rôle chargée et déchargée en fonction des aléas de la conduite.

L'axe horizontal 501 de la figure 5 représente le temps en secondes, l'axe vertical 502 de la figure 5 représente le courant mesuré sur l'électrode négative 10 en mA.

Les phases 520-525 représentées par des croix, correspondent à une utilisation de la deuxième électrode positive. La phase 523 correspond notamment à une accélération brutale (par exemple un dépassement) qui demande en peu de temps une puissance électrique importante à la batterie.

Sur la figure 5, les courants négatifs correspondent à des phases de charge (520-522, 524-525) et les courants positifs correspondent à des phases de décharge de la batterie.

Les phases 510-516 correspondent à une utilisation de l'électrode à air (première électrode positive 20). Ces phases comprennent des accélérations normales avec faible apport de puissance (50-512), et des phases pendant lesquelles la puissance demandée à la batterie est faible en comparaison avec la puissance des phases 520-525.

L'invention se rapporte également à un produit programme d'ordinateur comportant une suite d'instructions mémorisées sur un support de mémorisation pour exécution par un ordinateur ou un dispositif dédié, le programme étant configuré pour exécuter le procédé décrit ci-avant.

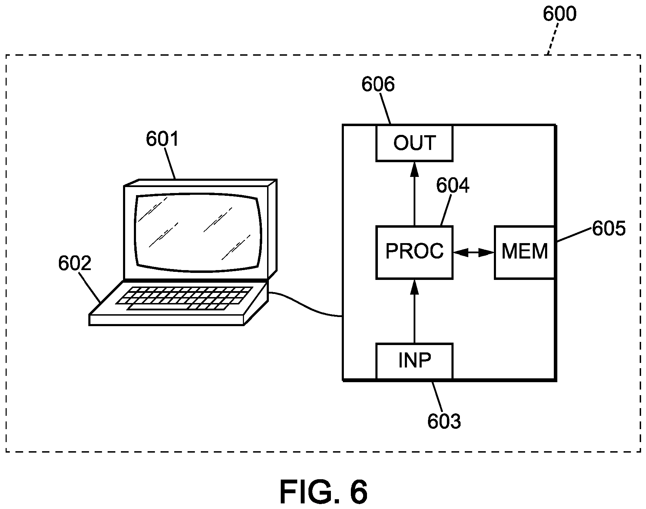

La figure 6 représente un exemple de système informatique permettant de faire fonctionner un produit programme d'ordinateur comprenant des instructions mettant en œuvre le procédé de la présente invention.

Dans ce mode de réalisation, le dispositif comporte un ordinateur 600, comprenant une mémoire 605 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 604. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gâte Array » en anglais).

Cet ordinateur comporte une interface d'entrée 603 pour la réception de données de mesures, et une interface de sortie 606 pour la fourniture de commandes contrôlant le dispositif d'évacuation 607. Enfin, l'ordinateur peut comporter, pour permettre une interaction aisée avec un utilisateur, un écran 601 et un clavier 602. Bien entendu, le clavier est facultatif, notamment dans le cadre d'un ordinateur ayant la forme d'une tablette tactile, par exemple.

L'invention trouve application dans les batteries métal-air rechargeables, et permet d'augmenter leur durée de vie et leurs performances électriques. La gestion améliorée de la puissance électrique transitant dans une batterie métal-air en charge et en décharge selon l'invention les rend utilisables dans de nombreux systèmes comme par exemple les dispositifs photovoltaïques, sujets à des variations de courant liés à l'ensoleillement, ou les véhicules électriques qui consomment et emmagasinent des puissances électriques variables liées à l'utilisation qui est faite du véhicule et des conditions de freinage ou accélération.

## Revendications

1. Procédé de gestion de la puissance électrique transitant par une cellule (100) d'une batterie (400) métal-air, la cellule comprenant :
- une électrode négative (10) reliée électriquement à une borne négative (101) de la batterie ;
- une première électrode positive (20) formant une électrode à air de la cellule ;
- une deuxième électrode positive (30) formant une électrode de puissance de la cellule ;
- un moyen de commutation (70) permettant de relier électriquement à une borne positive (102) de la batterie une électrode parmi la première électrode positive et la deuxième électrode positive ;
le procédé étant **caractérisé en ce qu'**il comprend :
- maintenir le moyen de commutation dans une configuration connectant la borne positive à la première électrode positive lorsqu'une puissance électrique à transiter dans la batterie correspond à un premier régime de puissances ;
- maintenir le moyen de commutation dans une configuration connectant la borne positive à la deuxième électrode positive lorsqu'une puissance électrique à transiter dans la batterie correspond à un deuxième régime de puissances, le deuxième régime de puissances étant associé à des puissances électriques plus fortes que des puissances électriques du premier régime.

2. Procédé selon la revendication 1, **caractérisé en ce qu'**il comprend en outre :
- obtenir la valeur d'un paramètre représentatif d'une puissance électrique à transiter dans la batterie ;
- comparer la valeur estimée à une valeur seuil (200) représentative d'une transition entre le premier régime et le deuxième régime ; et
lorsque la valeur estimée est supérieure à la valeur seuil :
- maintenir le moyen de commutation dans une configuration connectant la borne positive à la deuxième électrode positive afin de répondre aux critères de puissance du deuxième régime ;
lorsque la valeur estimée est inférieure à la valeur seuil :
- maintenir le moyen de commutation dans une configuration connectant la borne positive à la première électrode positive afin de répondre aux critères de puissance du premier régime.

3. Procédé selon la revendication 2, dans lequel le paramètre représentatif de la puissance électrique transitant par la batterie est un courant électrique mesuré sur l'électrode négative.

4. Procédé selon la revendication 3, dans lequel lorsque la cellule se décharge et lorsque l'amplitude du courant mesuré est supérieure à la valeur seuil :
- maintenir le moyen de commutation dans une position connectant la borne positive à la deuxième électrode positive ;
lorsque l'amplitude du courant mesuré est inférieure à la valeur seuil :
- maintenir le moyen de commutation dans une position connectant la borne positive à la première électrode positive.

5. Procédé selon la revendication 3, dans lequel la cellule comprend en outre une troisième électrode positive (40) de dégagement d'oxygène, le procédé comprenant en outre, lorsque la cellule se charge et lorsque l'amplitude du courant mesuré est supérieure à la valeur seuil :
- maintenir le moyen de commutation dans une position connectant la borne positive à la deuxième électrode positive ;
lorsque l'amplitude du courant mesuré est inférieure à la valeur seuil :
- maintenir le moyen de commutation dans une position connectant la borne positive à la troisième électrode positive.

6. Procédé selon l'une quelconque des revendications 4 ou 5, dans lequel la valeur seuil est comprise entre 20 mA par cm² d'électrode négative et 40 mA par cm² d'électrode négative.

7. Procédé selon la revendication 2, **caractérisé en ce qu'**il comprend en outre :
- sélectionner la configuration du moyen de commutation à partir de prévisions de puissance à transiter dans la batterie.

8. Procédé selon l'une quelconque des revendications précédentes, **caractérisé en ce qu'**il comprend en outre, en début de charge de la batterie :
- maintenir le moyen de commutation dans une position connectant la borne positive à la deuxième électrode positive.

9. Cellule (100) pour batterie (400) métal-air comprenant :
- une électrode négative (10) apte à être reliée électriquement à une borne négative (101) de la batterie ;
- une première électrode positive (20) formant une électrode à air de la cellule ;
- une deuxième électrode positive (30) formant une électrode de puissance de la cellule ;
- un moyen de commutation (70) permettant de relier électriquement à une borne positive (102) de la batterie une électrode parmi la première électrode positive et la deuxième électrode positive ;
la cellule étant **caractérisée en ce que** le moyen de commutation est configuré pour
- connecter la borne positive à la première électrode positive lorsqu'une puissance électrique à transiter dans la batterie correspond à un premier régime de puissances ;
- connecter la borne positive à la deuxième électrode positive lorsqu'une puissance électrique à transiter dans la batterie correspond à un deuxième régime de puissances, le deuxième régime de puissances étant associé à des puissances électriques plus fortes que des puissances électriques du premier régime.

10. Cellule selon la revendication 9, **caractérisée en ce qu'**elle comprend un appareil de mesure (61) d'un paramètre représentatif d'une puissance électrique à transiter dans la batterie.

11. Cellule selon la revendication 10, **caractérisée en ce que** l'appareil de mesure est choisi parmi : un capteur à effet Hall pour mesurer un courant, une résistance, une dérivation.

12. Cellule selon l'une quelconque des revendications 9 à 11, **caractérisée en ce que** le moyen de commutation est choisi parmi : un relais mécanique, un relais électromécanique.

13. Cellule selon l'une quelconque des revendications 9 à 12, **caractérisée en ce que** la cellule comprend en outre :
- une troisième électrode positive (40) formant une électrode de dégagement d'oxygène de la cellule.

14. Cellule selon l'une quelconque des revendications 9 à 13, **caractérisée en ce qu'**elle est agencée dans un dispositif choisi parmi : un panneau photovoltaïque, un véhicule électrique.

15. Batterie (400) métal-air comprenant au moins une cellule selon l'une quelconque des revendications 9 à 14.

## Patentansprüche

1. Verfahren zum Verwalten der elektrischen Leistung, die durch eine Zelle (100) einer Metall-Luft-Batterie (400) übertragen wird, wobei die Zelle umfasst:
- eine negative Elektrode (10), die elektrisch mit einem negativen Pol (101) der Batterie verbunden ist;
- eine erste positive Elektrode (20), die eine Luftelektrode der Zelle bildet;
- eine zweite positive Elektrode (30), die eine Leistungselektrode der Zelle bildet;
- ein Schaltmittel (70), welches es erlaubt, eine Elektrode aus erster positiver Elektrode und zweiter positiver Elektrode mit einem positiven Pol (102) der Batterie elektrisch zu verbinden;
wobei das Verfahren **dadurch gekennzeichnet ist, dass** es umfasst:
- Halten des Schaltmittels in einer Konfiguration, die den positiven Pol mit der ersten positiven Elektrode verbindet, wenn eine in der Batterie zu übertragende elektrische Leistung einem ersten Leistungsschema entspricht;
- Halten des Schaltmittels in einer Konfiguration, die den positiven Pol mit der zweiten positiven Elektrode verbindet, wenn eine in der Batterie zu übertragende elektrische Leistung einem zweiten Leistungsschema entspricht, wobei das zweite Leistungsschema mit elektrischen Leistungen verbunden ist, die stärker als die elektrischen Leistungen des ersten Schemas sind.

2. Verfahren nach Anspruch 1, **dadurch gekennzeichnet, dass** es ferner umfasst:
- Ermitteln des Wertes eines Parameters, der für eine in der Batterie zu übertragende elektrische Leistung repräsentativ ist;
- Vergleichen des geschätzten Wertes mit einem Schwellenwert (200), der für eine Übertragung zwischen dem ersten Schema und dem zweiten Schema repräsentativ ist; und
wenn der geschätzte Wert größer als der Schwellenwert ist:
- Halten des Schaltmittels in einer Konfiguration, die den positiven Pol mit der zweiten positiven Elektrode verbindet, um die Leistungskriterien des zweiten Schemas zu erfüllen;
wenn der geschätzte Wert kleiner als der Schwellenwert ist:
- Halten des Schaltmittels in einer Konfiguration, die den positiven Pol mit der ersten positiven Elektrode verbindet, um die Leistungskriterien des ersten Schemas zu erfüllen.

3. Verfahren nach Anspruch 2, wobei der Parameter, der für die durch die Batterie fließende elektrische Leistung repräsentativ ist, ein an der negativen Elektrode gemessener elektrischer Strom ist.

4. Verfahren nach Anspruch 3, wobei, wenn sich die Zelle entlädt und
wenn die Amplitude des gemessenen Stroms größer als der Schwellenwert ist:
- Halten des Schaltmittels in einer Position, die den positiven Pol mit der zweiten positiven Elektrode verbindet;
wenn die Amplitude des gemessenen Stroms kleiner als der Schwellenwert ist:
- Halten des Schaltmittels in einer Position, die den positiven Pol mit der ersten positiven Elektrode verbindet.

5. Verfahren nach Anspruch 3, wobei die Zelle ferner eine dritte positive Elektrode (40) zur Sauerstoffabgabe umfasst, wobei das Verfahren, wenn die Zelle lädt und wenn die Amplitude des gemessenen Stroms größer als der Schwellenwert ist, ferner umfasst:
- Halten des Schaltmittels in einer Position, die den positiven Pol mit der zweiten positiven Elektrode verbindet;
wenn die Amplitude des gemessenen Stroms kleiner als der Schwellenwert ist:
- Halten des Schaltmittels in einer Position, die den positiven Pol mit der dritten positiven Elektrode verbindet.

6. Verfahren nach einem der Ansprüche 4 oder 5, wobei der Schwellenwert zwischen 20 mA pro cm² der negativen Elektrode und 40 mA pro cm² der negativen Elektrode liegt.

7. Verfahren nach Anspruch 2, **dadurch gekennzeichnet, dass** es ferner umfasst:
- Auswahl der Konfiguration des Schaltmittels basierend auf Leistungsprognosen, die in der Batterie übertragen werden sollen.

8. Verfahren nach einem der vorhergehenden Ansprüche, **dadurch gekennzeichnet, dass** es zu Beginn des Ladens der Batterie ferner umfasst:
- Halten des Schaltmittels in einer Position, die den positiven Pol mit der zweiten positiven Elektrode verbindet.

9. Zelle (100) für eine Metall-Luft-Batterie (400), umfassend:
- eine negative Elektrode (10), die mit einem negativen Pol (101) der Batterie elektrisch verbunden werden kann;
- eine erste positive Elektrode (20), die eine Luftelektrode der Zelle bildet;
- eine zweite positive Elektrode (30), die eine Leistungselektrode der Zelle bildet;
- ein Schaltmittel (70), welches es erlaubt, eine aus erster positiver Elektrode und zweiter positiver Elektrode mit einem positiven Pol (102) der Batterie elektrisch zu verbinden;
wobei die Zelle **dadurch gekennzeichnet ist, dass** das Schaltmittel dazu konfiguriert ist,
- den positiven Pol mit der ersten positiven Elektrode zu verbinden, wenn eine in der Batterie zu übertragende elektrische Leistung einem ersten Leistungsschema entspricht;
- den positiven Pol mit der zweiten positiven Elektrode zu verbinden, wenn eine in der Batterie zu übertragende elektrische Leistung einem zweiten Leistungsschema entspricht, wobei das zweite Leistungsschema mit elektrischen Leistungen verbunden ist, die stärker sind als die elektrischen Leistungen des ersten Schemas.

10. Zelle nach Anspruch 9, **dadurch gekennzeichnet, dass** sie eine Vorrichtung (61) zum Messen eines Parameters umfasst, der für eine in der Batterie zu übertragende elektrische Leistung repräsentativ ist.

11. Zelle nach Anspruch 10, **dadurch gekennzeichnet, dass** die Messvorrichtung gewählt ist aus: einem Hall-Effekt-Sensor zur Messung eines Stroms, eines Widerstands, einer Ableitung.

12. Zelle nach einem der Ansprüche 9 bis 11, **dadurch gekennzeichnet, dass** das Schaltmittel gewählt ist aus: einem mechanischen Relais, einem elektromechanischen Relais.

13. Zelle nach einem der Ansprüche 9 bis 12, **dadurch gekennzeichnet, dass** die Zelle ferner umfasst:
- eine dritte positive Elektrode (40), die eine Sauerstoffabgabeelektrode der Zelle bildet.

14. Zelle nach einem der Ansprüche 9 bis 13, **dadurch gekennzeichnet, dass** sie in einer Vorrichtung angeordnet ist, gewählt aus: einem Photovoltaik-Paneel, einem Elektrofahrzeug.

15. Metall-Luft-Batterie (400), umfassend wenigstens eine Zelle nach einem der Ansprüche 9 bis 14.

## Claims

1. Method for managing the electric power passing through a cell (100) of a metal-air battery (400), the cell comprising:
- a negative electrode (10) electrically connected to a negative terminal (101) of the battery;
- a first positive electrode (20) forming an air electrode of the cell;
- a second positive electrode (30) forming a power electrode of the cell;
- a switching means (70) for electrically connecting an electrode among the first positive electrode and the second positive electrode to a positive terminal (102) of the battery;
the method being **characterized in that** it comprises:
- maintaining the switching means in a configuration connecting the positive terminal to the first positive electrode when an electric power to pass through the battery corresponds to a first power range;
- maintaining the switching means in a configuration connecting the positive terminal to the second positive electrode when an electric power to pass through the battery corresponds to a second power range, the second power range being associated with higher electric powers than the electric powers of the first range.

2. Method according to claim 1, further comprising:
- obtaining the value of a parameter representative of an electric power to pass through the battery;
- comparing the estimated value to a threshold value (200) representative of a transition between the first power range and the second power range; and
when the estimated value is above the threshold value:
- maintaining the switching means in a configuration connecting the positive terminal to the second positive electrode in order to meet the power criteria of the second power range;
when the estimated value is below the threshold value:
- maintaining the switching means in a configuration connecting the positive terminal to the first positive electrode in order to meet the power criteria of the first power range.

3. Method according to claim 2, wherein the parameter representative of the electric power passing through the battery is an electric current measured on the negative electrode.

4. Method according to claim 3, wherein when the cell is discharging and when the amplitude of the measured current is above the threshold value:
- maintaining the switching means in a position connecting the positive terminal to the second positive electrode;
when the amplitude of the measured current is below the threshold value:
- maintaining the switching means in a position connecting the positive terminal to the first positive electrode.

5. Method according to claim 3, wherein the cell further comprises an oxygen-evolution third positive electrode (40), the method further comprising, when the cell is charging and when the amplitude of the measured current is above the threshold value:
- maintaining the switching means in a position connecting the positive terminal to the second positive electrode;
when the amplitude of the measured current is below the threshold value:
- maintaining the switching means in a position connecting the positive terminal to the third positive electrode.

6. Method according to any one of claims 4 or 5, wherein the threshold value is between 20 mA per cm² of negative electrode and 40 mA per cm² of negative electrode.

7. Method according to claim 2, further comprising:
- selecting the configuration of the switching means based on predictions of the power that will pass through the battery.

8. Method according to any one of the preceding claims, further comprising, at the beginning of charging the battery:
- maintaining the switching means in a position connecting the positive terminal to the second positive electrode.

9. Cell (100) for a metal-air battery (400), comprising:
- a negative electrode (10) adapted to be electrically connected to a negative terminal (101) of the battery;
- a first positive electrode (20) forming an air electrode of the cell;
- a second positive electrode (30) forming a power electrode of the cell;
- a switching means (70) for electrically connecting an electrode among the first positive electrode and the second positive electrode to a positive terminal (102) of the battery;
the cell being **characterized in that** the switching means is configured for
- connecting the positive terminal to the first positive electrode when an electric power to pass through the battery corresponds to a first power range;
- connecting the positive terminal to the second positive electrode when an electric power to pass through the battery corresponds to a second power range, the second power range being associated with higher electric powers than the electric powers of the first range.

10. Cell according to claim 9, comprising a device (61) for measuring a parameter representative of an electric power to pass through the battery.

11. Cell according to claim 10, wherein the measuring device is chosen among: a Hall effect sensor for measuring a current, a resistor, a shunt.

12. Cell according to any one of claims 9 to 11, wherein the switching means is chosen among: a mechanical relay, an electromechanical relay.

13. Cell according to any one of claims 9 to 12, further comprising:
- a third positive electrode (40) forming an oxygen-evolution electrode of the cell.

14. Cell according to any one of claims 9 to 13, arranged in a device chosen among: a photovoltaic panel, an electric vehicle.

15. Metal-air battery (400) comprising at least one cell according to any one of claims 9 to 14.
